Europäisches Patentamt

European Patent Office

Office européen des brevets

(11) Publication number: **0 144 161 B1**

# EUROPEAN PATENT SPECIFICATION

(45) Date of publication of patent specification: **16.10.91**   (51) Int. Cl.5: **H02P 5/40, H02P 7/62**

(21) Application number: **84307624.1**

(22) Date of filing: **05.11.84**

The file contains technical information submitted
after the application was filed and not included in
this specification

(54) **Control system for an ac motor.**

(30) Priority: **05.11.83 JP 206878/83**
**04.05.84 JP 88358/84**

(43) Date of publication of application:
**12.06.85 Bulletin 85/24**

(45) Publication of the grant of the patent:
**16.10.91 Bulletin 91/42**

(84) Designated Contracting States:
**DE FR GB SE**

(56) References cited:
**EP-A- 0 045 951**
**DD-A- 132 826**
**US-A- 3 894 277**
**US-A- 4 264 853**
**US-A- 4 276 504**

**ELEKTRONISCHE ZEITSCHRIFT ETZ-A, vol.**
**99, no. 3, 1978, pages 156-157, H.-W. LEDER**
**et al.:"Einsatz einer Schonzeitregelung bei**
**einem selbstgesteuerten Stromrichter-**
**Synchronmotor"**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Hirata, Akio c/o Patent Division**
**Toshiba Corporation Principal Office**
**1-1, Shibaura 1-chome Minato-ku Tokyo(JP)**
Inventor: **Naito, Yoshio c/o Patent Division**
**Toshiba Corporation Principal Office**
**1-1, Shibaura 1-chome Minato-ku Tokyo(JP)**

(74) Representative: **Kirk, Geoffrey Thomas et al**
**BATCHELLOR, KIRK & CO. 2 Pear Tree Court**
**Farringdon Road**
**London EC1R 0DS(GB)**

EP 0 144 161 B1

Rank Xerox (UK) Business Services

## Description

This invention relates generally to a control system for an AC motor and more particularly to an AC motor control system having an inverter that supplies AC power to the AC motor.

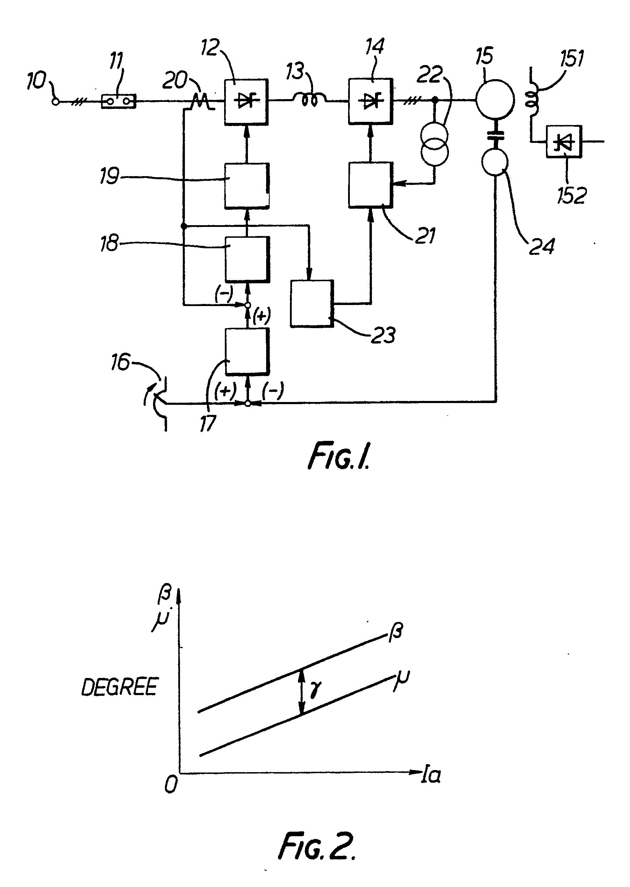

Figure 1 of the accompanying drawings shows an example of a conventional control system of an AC motor. In Figure 1, reference numeral 10 designates a three-phase AC source, 11 a circuit breaker, 12 a thyristor converter, 13 a smoothing DC reactor, 14 a 120°-conduction inverter which includes thyristors, 15 an AC motor which is the load of the inverter 14, 151 a field winding of the AC motor, 152 a converter that supplies power to the field winding 151, 16 a desired speed setter, 24 a detector for detecting the speed of the AC motor, 17 a speed controller, 18 a current controller, 19 a phase controller for controlling the output voltage of the converter 12, 20 a current detector, 21 a control lead angle $\beta$ controller, 22 a voltage detector, and 23 a detector for detecting the overlap angle $\mu$ of the inverter 14.

The document ETZ.A vol.99 n° 3 (03.78); H.W. LEDER et Al discloses at pp 156-157 a similar control system.

As can be seen from Figure 1, AC power from the three-phase AC power source 10 is converted into a variable DC voltage by means of the converter 12, and is smoothed by the DC reactor 13. Thereafter, it is reversely converted into AC power by the inverter 14 and supplied to the AC motor 15. The converter 12 and the inverter 14 are controlled such that a speed reference signal, set by the speed setter 16, and a speed signal corresponding to the speed of the AC motor 15, as detected by 7 the speed detector 24, are fed into the speed controller 17 where they are compared and amplified so as to produce a current reference signal. The thus produced current reference signal and the current signal detected by the current detector 20 are supplied to the current controller 18 where they are compared and amplified. The result of this comparison is fed into the phase controller 19 so as to control the output voltage of the converter 12.

On the other hand, the overlap angle detector 23 detects the overlap angle $\mu$ of the inverter 14 on the basis of currents at least detected by the current detector 20, voltages detected by the voltage detector 22 and frequencies detected by the speed detector 24. The thus detected overlap angle $\mu$ and output voltage of the inverter 14 detected by the voltage detector 22 are fed into the controller 21, which, in turn, determines the firing pulse timing for respective thyristors of the inverter 14 so as to control the output frequency thereof. Here, a control lead angle $\beta$ is based on the sum of a constant commutation marginal angle $\gamma$ determined by the thyristors employed in the inverter 14 and an overlap angle $\mu$ that increases in relation to an increase in current of the AC motor 15. The relationship between $\beta$, $\mu$ and Ia is shown in Figure 2.

When the above-described control is performed digitally using a microprocessor and the like, an overlap angle $\mu$ is calculated with a specified calculation processing interval. However, if motor acceleration or deceleration is rapid or the rate of change of current is great, the actual overlap angle $\mu$ is varied more than the calculated value, thereby the commutation marginal angle becomes insufficient. This results in commutation failure of the inverter so that a safe operation cannot ensue. This disadvantage can be eliminated by decreasing the time interval for processing of the overlap angle $\mu$. However, a microprocessor or the like inevitably has limited processing speed. Further, there have been such disadvantages that, even if the overlap angle is accurately processed, in the case where the current of the AC motor 15 is rapidly increased, the terminal voltage is also varied causing the actual overlap angle $\mu$ to be greater than the thus calculated overlap angle $\mu$, so that the variable speed control of the AC motor 15 becomes unstable.

Accordingly, an object of this invention is to provide a novel control system for an alternating current motor which is capable of controlling a control lead angle $\beta$ without commutation failure even during periods of rapid motor acceleration or deceleration.

According to the present invention, a control system for an AC motor comprises a controllable thyristor converter for converting AC current from a power source to DC current; a phase controller for controlling the output voltage of the converter; a thyristor inverter arranged to receive smoothed DC current from the converter and to convert it to AC current, said inverter being adapted to drive said AC motor by means of said AC curent; means for detecting the overlap angle of the inverter; and means for controlling the control lead angle of the inverter; characterised in the provision of detector means for detecting the rate of acceleration/deceleration of the motor; and overlap angle setter means for setting a predetermined overlap angle of the inverter; and where said control lead angle means serves to control the lead angle of the inverter as determined by the overlap angle setter means when the acceleration/deceleration rate of the motor detected by the detector exceeds a predetermined value.

A more complete appreciation of the invention and many of the attendant advantages thereof will be readily obtained as the same becomes better understood by reference to the following detailed description when considered in connection with the accompanying drawings, wherein:

Figure 1 is a block diagram illustrating a conventional control system for AC motors;

Figure 2 is a diagram illustrating the relationship between current, control lead angle $\beta$ and overlap angle $\mu$;

Figure 3 is a diagram illustrating one embodiment of a control system for AC motors according to the invention;

Figures 4, 6, 10 and 12 are diagrams illustrating the relationships between speed, current and control lead angle $\beta$ of respective embodiments of the invention; and

Figures 5, 7-9, 11, 13 and 14 are block diagrams illustrating other embodiments of control systems for AC motors according to the invention.

Referring now to the drawings, wherein like reference numerals designate identical or corresponding parts throughout the several views, various embodiments of the present invention will be described.

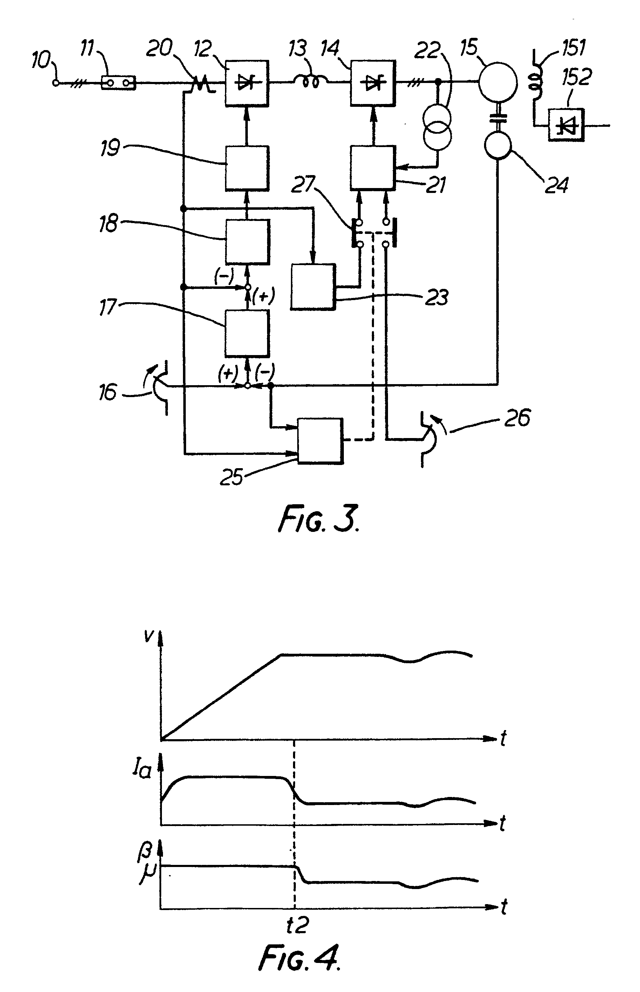

Figure 3 is a block diagram illustrating one embodiment of the invention. For the sake of brevity, the description of the structure identical or equivalent to that shown in Figure 1, as evidenced by like reference numerals, is omitted. In Figure 3, reference numeral 25 designates an acceleration-deceleration rate detector, 26 an overlap angle setter, and 27 a switch. When the acceleration-deceleration rate, calculated by speeds defected by detector 24, exceeds a specified rate, the detector 25 operates the switch 27 to feed a specified overlap angle u set by the overlap angle setter 26 into the controller 21. When the acceleration-deceleration rate decreases, the current detected by current detector 20 also decreases, a signal corresponding to the detected current is fed into one input of the detector 25, which causes the switch 27 to be reset. Then the control lead angle $\beta$ is controlled by using an overlap angle u obtained by the overlap angle detector 23.

As can be understood from Figure 4, during the period from 0 to t2, a signal representing a specified overlap angle u set by the overlap angle setter 26 is supplied so that, even when the acceleration is rapid, the necessary commutation marginal angle $\gamma$ can be obtained, whereby a steady operation can be performed without any commutation failure.

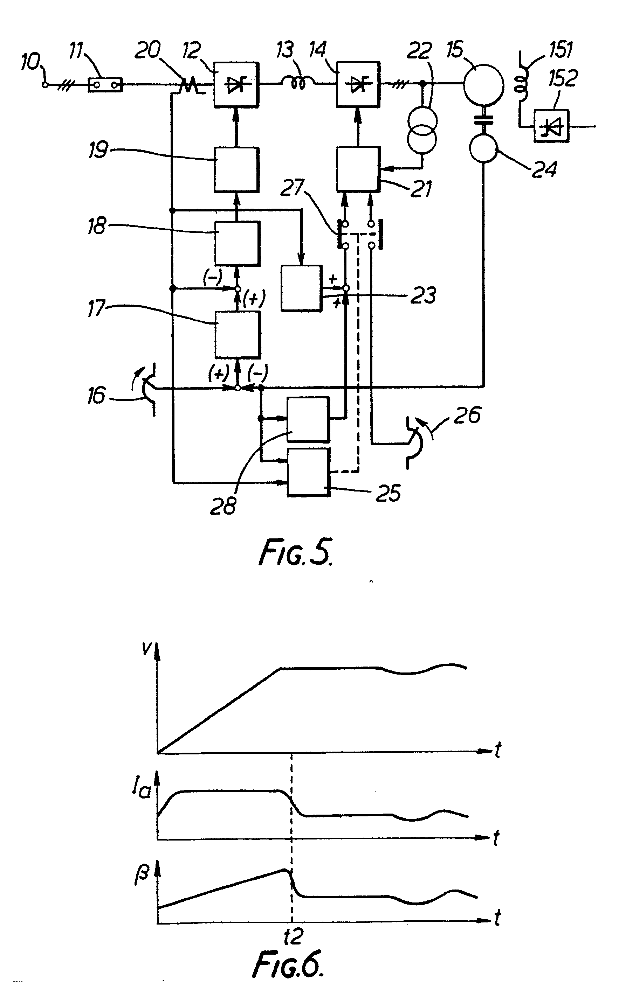

In Figure 5, reference numeral 28 designates a commutation marginal time controller that controls the commutation marginal time $\gamma$. A signal indicative of the speed detected by the speed detected 24 is fed into the commutation marginal time controller 28 so as to be converted into an angle which, in turn, is summed with an overlap angle u detected by the overlap angle detector 23 and fed into the controller 21. When acceleration or deceleration is rapid, if the acceleration-deceleration rate has exceeded a specified value, the switch 27 is operated to feed a signal representing a specified overlap angle u set by the overlap angle setter 26 into the controller 21 so as to control the control lead angle $\beta$.

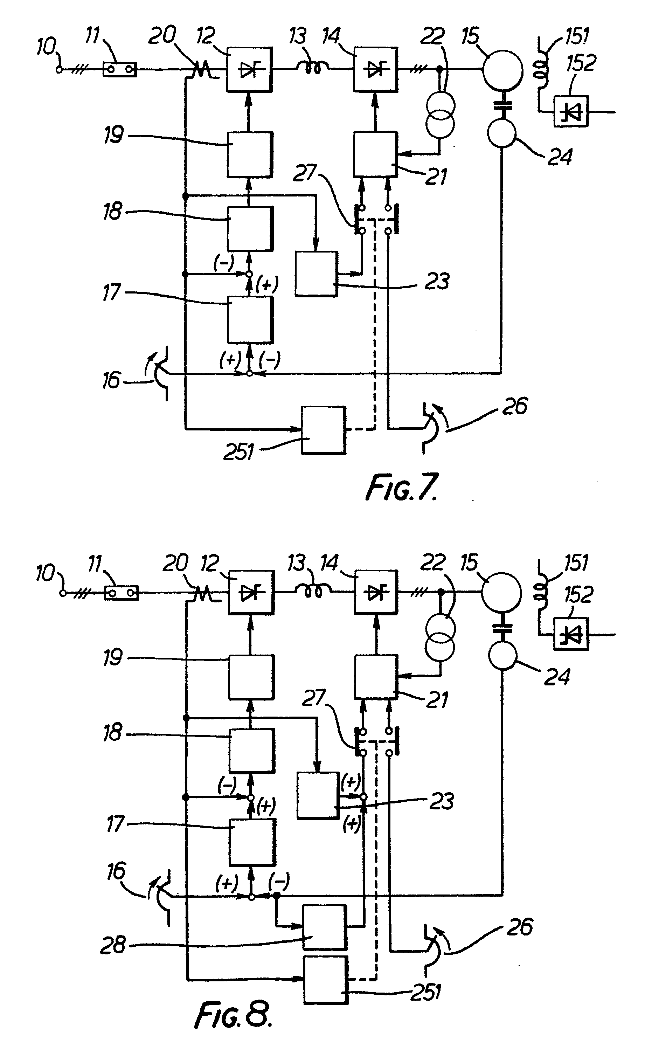

Figure 6 is a diagram illustrating the relationship between speed, current and control lead angle $\beta$ in the embodiment shown in Figure 5. As can be understood from the relationship diagram, during the period from 0 to t2, the velocity increases and the acceleration-deceleration rate exceeds a specified acceleration-deceleration rate, so that a specified overlap angle is given and, thereafter, a control lead angle $\beta$ is controlled on the basis of an overlap angle obtained by the overlap angle detector 23.

Therefore, a steady operation of the AC motor can be secured without any commutation failure because a specified overlap angle is given to control the control lead angle $\beta$ such that a constant commutation marginal time $\gamma$ is invariably obtained, even when acceleration or deceleration is rapid.

In the two embodiments of the invention described above, the acceleration-deceleration rate of the motor is obtained by use of a speed signal, however, a current reference signal can also be used to obtain similar advantages.

In Figures 7 and 8, reference numeral 251 designates a current level detector that receives a signal indication of current and, when the current exceeds a specified value, it operates the switch 27 to feed a signal representing a specified overlap angle u set by the overlap angle setter 26 into the controller 21. When acceleration or deceleration is rapid, and the acceleration-deceleration exceeds a specified rate, the current also exceeds a specified level; this causes the switch 27 to be switched so as to feed a specified overlap angle to the control lead angle $\beta$ controller 21, whereby similar advantages can be obtained. When the current level detector 251 functions to detect a current change rate in addition to comparing the current level, this enables the switch 27 to be switched to feed a specified overlap angle to the controller 21, so as to control the control lead angle $\beta$, even when an abrupt current change occurs, whereby a steady operation can also be obtained without any commutation failure.

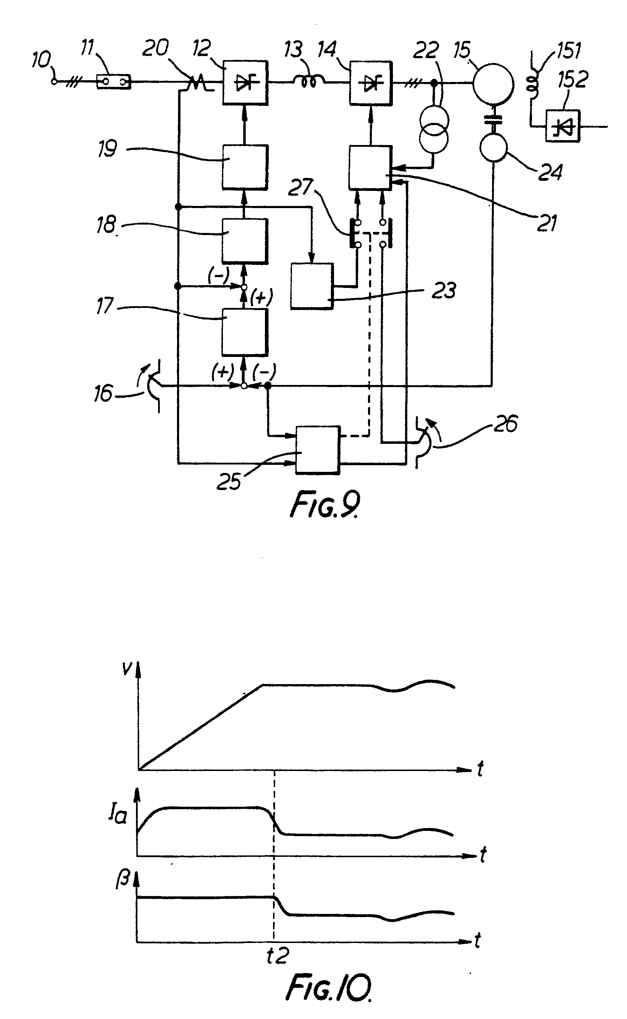

Refering now to Figure 9, reference numeral 25 designates an acceleration-deceleration rate detector, 26 an overlap angle setter, and 27 a switch. When the detected acceleration-deceleration rate exceeds a specified value, the acceleration-deceleration rate detector 25 causes the switch 27 to be switched to feed a specified overlap angle u set by the overlap angle setter 26 into the control lead angle $\beta$ controller 21. The control lead angle $\beta$ controller 21 also directly receives an output signal of the acceleration-deceleration rate detector 25.

When the acceleration-deceleration rate detected by the acceleration-deceleration rate detector 25 is below a specified value, the control lead angle $\beta$ controller 21 controls, on the basis of the output signal of the overlap angle detector 23 and the voltage detecting signal of the voltage detector 22, a control lead angle $\beta$ in such a manner that commutation marginal time of the inverter 14 is maintained substantially constant independently of the speed of the AC motor 15. When the acceleration-deceleration rate exceeds a specified value, the control lead angle $\beta$ controller 21 controls, by use of an overlap angle u set by the overlap angle setter 26, a control lead angle $\beta$ in such a manner that commutation marginal angle $\gamma$ of the inverter 14 is maintained substantially constant. When the acceleration-deceleration rate is decreased, as caused by a decrease in the motor current, the acceleration-deceleration rate detector 25 causes the switch 27 to be reset on the basis of a current detecting signal applied by the current detector 20 as an input signal to another terminal of the acceleration-deceleration rate detector 25. Therefore, after the acceleration-deceleration rate has once exceeded a specified value, the acceleration-deceleration rate detector 25 maintains the above-described state until the current of the AC motor decreases to the specified value.

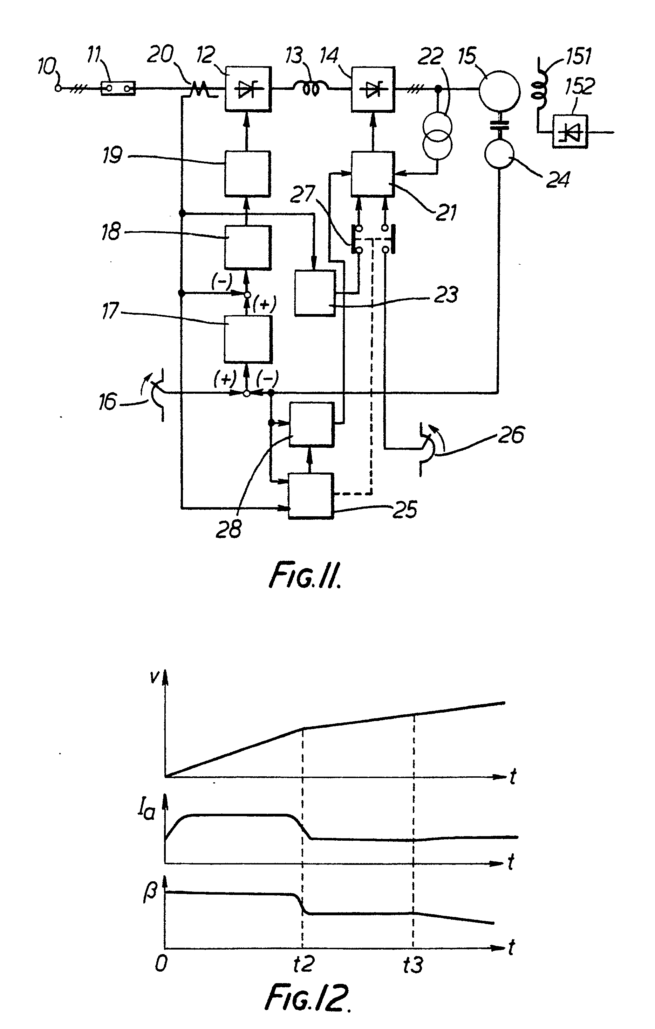

Figure 10 is a diagram illustrating the relationship between current and control lead angle $\beta$. In Figure 10, the control lead angle $\beta$ controller 21 receives a specified overlap angle u set by the overlap angle setter 26 during the period from 0 to t2 in order to control a commutation marginal angle $\gamma$ so as to be substantially constant, so that, even when acceleration or deceleration is rapid, a necessary commutation marginal angle $\gamma$ can be obtained, whereby steady operation of the AC motor can be secured without any commutation failure.

On the other hand, after the time t2, the acceleration-deceleration rate substantially decreases, so that the control lead angle $\beta$ controller 21 controls the control lead angle $\beta$ such that the overlap angle u detected by the overlap angle detector 23 and the commutation marginal time $\gamma$ are maintained substantially constant, whereby the .control lead angle $\beta$ becomes smaller and the operation power factor of the AC motor 15, which is expressed by the following equation:

$$\cos\left(\beta - \tfrac{u}{2}\right) \cos\left(\tfrac{u}{2}\right)$$

is enhanced.

Therefore, when the control lead angle $\beta$ is determined as above described, the operation power factor is enhanced whereby the current of the AC motor is decreased and operation efficiency is also enhanced.

Figures 11-14 show other embodiments according to the invention. In Figure 11, the commutation marginal time controller 28 receives a speed signal and an output from the acceleration-deceleration rate detector 25, converts these signals into an angle and, in turn, feeds a signal corresponding to a commutation marginal angle $\gamma$ to the control lead angle $\beta$ controller 21. Upon rapid acceleration or deceleration, if the acceleration-deceleration rate detector 25 detects that the acceleration-deceleration rate has exceeded a specified value, the switch 27 is caused to feed a specified overlap angle u set by the overlap setter 26 into the control lead angle $\beta$ controller 21 so as to control the control lead angle $\beta$.

In this case, the commutation marginal time controller 28 controls the control lead angle $\beta$ controller 21 such that the commutation marginal angle $\gamma$ is controlled to be substantially constant. On the other hand, when an acceleration-deceleration rate drops below a specified value, if the speed of the AC motor 15 is more than a specified value, the commutation marginal time contoller 28 controls the control lead angle $\beta$ such that the commutation marginal time is controlled to be substantially constant.

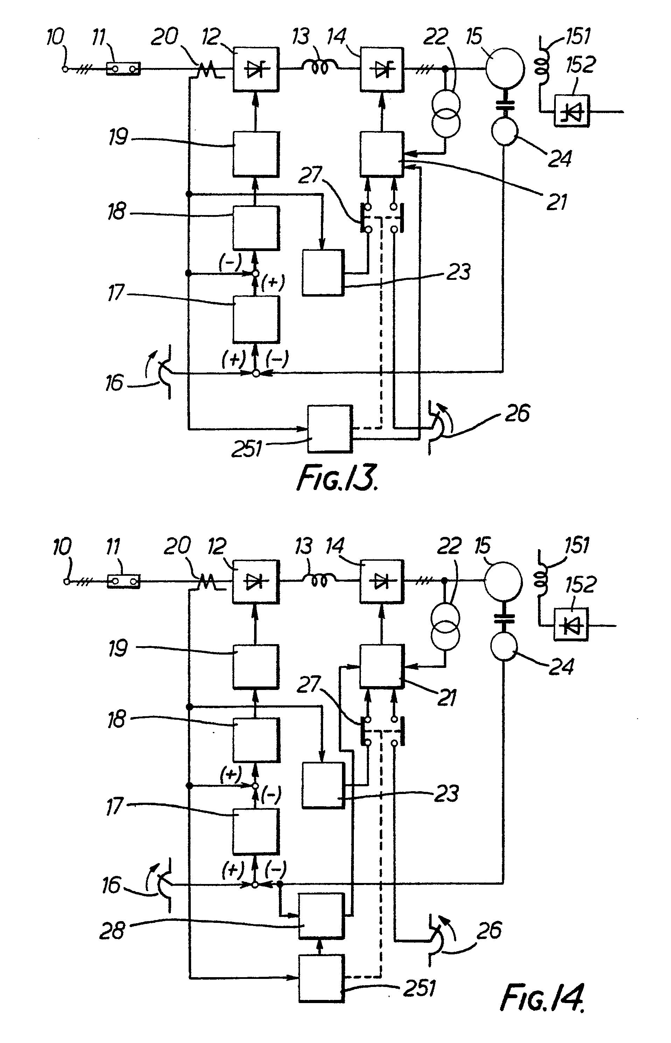

Figure 12 is a diagram illustrating the relationship between speed, current and the control lead angle $\beta$ in the embodiment shown in Figure 11. In Figure 12, during the period from 0 to t2, the acceleration-deceleration rate is more than a specified value, so that a specified overlap angle u is fed into the control lead angle $\beta$ controller 21 and, after the time t2, an overlap angle obtained from the overlap angle detector 23 is fed to the control lead angle $\beta$ controller 21 so as to control a control lead angle $\beta$.

Further, a commutation marginal time is controlled such that a commutation marginal angle $\gamma$ is maintained constant until a time t3. However, after the time t3, even when current Ia remains constant, the commutation marginal time is controlled so as to be substantially constant. Thus, the control lead angle $\beta$ becomes smaller compared to that existing in the period between the times t2 and t3.

Moreover, control of the AC motor 15 may be carried out only when the acceleration-deceleration rate detector 25 detects a specified acceleration rate or only when a specified deceleration rate is detected by the same. Namely, similar advantages can be obtained even when the control of the AC motor 15 is carried out separately in terms of when acceleration or deceleration is made.

In the aforementioned embodiment, the acceleration-deceleration rate of speed is detected by use of a speed signal. However, a specified speed reference signal may also be used instead to achieve similar advantages.

Figures 13 and 14 show block diagrams illustrating other embodiments according to the invention. Reference numeral 251 designates the current level detector, which detects when the current exceeds a specified value, and then causes the switch 27 to be switched so as to feed a specified overlap angle u set by the overlap angle setter 26 into the control lead angle $\beta$ controller 21. When acceleration or deceleration is rapid, if the detected speed exceeds a specified acceleration-deceleration rate, the detected current also exceeds a specified level. The fact that the current has exceeded the specified level causes the switch 27 to be switched so as to feed a specified overlap angle u into the control lead angle $\beta$ controller 21, so that similar advantages can be obtained. In addition to performing a current comparison function, the current level detector 251 detects the current change rate. Therefore, even when a rapid current change occurs, the current level detector 251 can cause the switch to be switched so as to feed a specified overlap angle u into the control lead angle $\beta$ controller 21, whereby the control lead angle $\beta$ is controlled. This achieves steady operation of the AC motor 15 without any commutation failure.

## Claims

1. A control system for an AC motor comprising a controllable thyristor converter (12) for converting AC current from a power source (10) to DC current; a phase controller (19) for controlling the output voltage of the converter (12); a thyristor inverter (14) arranged to receive smoothed DC current from the converter (12) and to convert it to AC current, said inverter being adapted to drive said AC motor by means of said AC current; means (23) for detecting the overlap angle ($\mu$) of the inverter; and means (21) for controlling the control lead angle ($\beta$) of the inverter; characterised in the provision of detector means (25) for detecting the rate of acceleration/deceleration of the motor; and overlap angle setter means (26) for setting a predetermined overlap angle of the inverter; and where said control lead angle means (21) serves to control the lead angle ($\beta$) of the inverter as determined by the overlap angle setter means (26) when the acceleration/deceleration rate of the motor detected by the detector exceeds a predetermined value.

2. A control system as claimed in claim 1, characterised in the provision of switch means (27) arranged to connect the output of the detecting means (23) to the control means (21) until the detecting means (25) detect an acceleration/deceleration rate exceeding said predetermined value whereupon the switch means connect the output of the setter means (26) to the control means (21).

3. A control system as claimed in claim 1 or 2, characterised in that the detecting means (25) is responsive to the speed of the motor.

4. A control system as claimed in claim 1 or 2, characterised in that the detecting means (25) is responsive to the current supplied to the converter.

5. A control system as claimed in claim 1, 2, 3 or 4, characterised in the provision of a commutation marginal time controller (28) which produces a signal representing marginal angle ($\gamma$) and which is added to the output signal representing overlap angle ($\mu$) from the detecting means (23) when the acceleration/deceleration rate does not exceed the predetermined value.

6. A control system as claimed in claim 1, 2, 3 or 4, characterised in the provision of a commutation marginal time controller (28) which produces a signal representing marginal angle ($\gamma$), said signal being supplied to the control means (21).

## Revendications

1. Système de contrôle ou de commande pour un moteur à courant alternatif comprend un convertisseur à thyristors commandable (12) pour convertir le courant alternatif fourni par une source de courant continu; un contrôleur de phase (19) pour régler la tension de sortie du convertisseur (12); un inverseur à thyristors (14) monté pour recevoir un courant continu filtré du convertisseur (12) et pour le convertir en courant alternatif, ledit inverseur étant adapté à alimenter ledit moteur alternatif au moyen dudit courant alternatif; des moyens (23) pour détecter l'angle d'empiétement ($\mu$) de l'inverseur; et des moyens (21) pour régler ledit angle d'avance de commande ($\beta$) de l'inverseur; caractérisé en ce qu'il comprend des moyens (25) pour détecter la vitesse d'accélération et de décélération du moteur et des moyens de réglage (26) pour fixer un angle d'empiètement ou de recouvrement prédéterminé de l'inverseur; et en ce que lesdits moyens de réglage de l'angle de commande d'avance (21) servent à contrôler l'angle d'empiétement ou d'avance (β) de l'inverseur établi par les moyens de fixation de l'angle d'empiétement (26) quand le taux d'accélération ou de décélération du moteur constaté par le détecteur dépasse un certain seuil prédéterminé.

2. Système de contrôle ou de commande selon la revendication 1, caractérisé en ce qu'il comprend des moyens de commutation (27) arrangés pour connecter la sortie des moyens de détection (23) aux moyens de contrôle (21) jusqu'à ce que les moyens de détection (25) constatent un taux ou une vitesse d'accélération ou de décélération dépassant ladite valeur prédéterminée, à la suite de quoi les moyens de commutation relient la sortie des moyens de fixation (26) aux moyens de commande (21).

3. Système de contrôle ou de commande selon la revendication 1 ou 3, caractérisé en ce que les moyens de détection (25) sont influencés par la vitesse du moteur.

4. Système de contrôle ou de commande selon la revendication 1 ou 2, caractérisé en ce que les moyens de détection (25) sont influencés par le courant alimentant le convertisseur.

5. Système de contrôle ou de commande selon l'une quelconque des revendications 1, 2, 3 ou 4, caractérisé en ce qu'il comprend un contrôleur ou une commande de marge de temps de commutation (28) qui produit un signal représentant l'angle marginal (γ) et qui est additionné au signal de sortie représentant l'angle d'empiétement ou de recouvrement (μ) provenant des moyens de détection (23) quand la vitesse d'accélération ou de décélération ne dépasse pas la valeur prédéterminée.

6. Système de contrôle ou de commande selon l'une quelconque des revendications 1, 2, 3 ou 4, caractérisé en ce qu'il comprend un contrôleur ou un régleur de temps de marge de commutation (28) qui produit un signal représentant l'angle marginal (γ), ledit signal étant fourni aux moyens de contrôle (21).

**Patentansprüche**

1. Steuersystem für einen Wechselstrommotor mit einem Steuerbaren Thyristorkonverter (12), um Wechselstrom aus einer Energiequelle (10) in Gleichstrom zu verwandeln, einem Phasenregler (19) zur Steuerung der Ausgangesspannung des Konverters (12); einem Thyristorinverter (14), der so angeordnet ist, daß er ausgeglichenen Gleichstrom aus dem Konverter (12) empfängt, um ihn in Wechselstrom zu verwandeln, wobei der Inverter so angeschlossen ist, daß der Wechselstrommotor durch den Wechselstrom angetrieben wird; einer Einrichtung (23) zum Nachweis des Überlappungswinkels (μ) des Inverters; und einer Einrichtung (21) zur Steuerung des Steuervoreilwinkels (β) des Inverters; **gekennzeichnet durch** eine Nachweiseinrichtung (25) zum Nachweis der Beschleunigungs-/Verlangsamungsrate des Motors; und eine Überlappungswinkelsetzeinrichtung (26) zur Vorgabe eines vorbestimmten Überlappungswinkels des Inverters ;und wobei die Voreilwinkelsteuereinrichtung (21) zur Steuerung des Voreilwinkels (β) des Inverters, wie sie durch die Überlappungswinkelsetzeinrichtung (26) bestimmt ist, dient, wenn die Beschleunigungs-/Verlangsamungsrate des Motors, wie durch den Detektor nachgewiesen, einen vorbestimmten Wert übertrifft.

2. Steuersystem nach Anspruch 1, **dadurch gekennzeichnet**, daß eine Schalteinrichtung (27) vorhanden und so ausgelegt ist, daß der Ausgang der Nachweiseinrichtung (23) mit der Steuereinrichtung (21) verbunden wird bis die Nachweiseinrichtung (25) eine Beschleunigungs-/Verlangsamungsrate nachweist, die den vorbestimmten Wert übersteigt, worauf die Schalteinrichtung den Ausgang der Setzeinrichtung (26) mit der Steuervorrichtung (21) verbindet.

3. Steuersystem nach Anspruch 1 oder 2, **dadurch gekennzeichnet,** daß die Nachweiseinrichtung (25) auf die Geschwindigkeit des Motors reagiert.

4. Steuersystem nach Anspruch 1 oder 2, **dadurch gekennzeichnet,** daß die Nachweisvorrichtung (25) auf den dem Konverter zugeführten Strom reagiert.

5. Steuersystem nach Anspruch 1, 2, 3 oder 4, **dadurch gekennzeichnet,** daß ein Kommutierungs-Randzeitregler (28) vorhanden ist, der ein Signal erzeugt, welches den Randwinkel (γ) repräsentiert und welches dem Ausgangssignal aus der Nachweiseinrichtung (23), das den Überlap-pungswinkel (μ) darstellt, zugefügt wird, wenn die Beschleunigungs-/Verlangsamungsrate einen vorbestimmten Wert nicht überschreitet.

6. Steuersystem nach Anspruch 1, 2, 3 oder 4, **dadurch gekennzeichnet,** daß ein Kommutierungs-Randzeitregler (28) vorhanden ist, der ein Signal erzeugt, welches den Rand-winkel ($\gamma$) darstellt, wobei das Signal an die Steuereinrichtung (21) weitergeleitet wird.

Fig. 1.

Fig. 2.

FIG. 3.

FIG. 4.

FIG.5.

FIG.6.

Fig.7.

Fig.8.

Fig.9.

Fig.10.

Fig.II.

Fig.I2.

Fig.13.

Fig.14.